# EUROPÄISCHE PATENTSCHRIFT

(11) **EP 0 368 105 B1**
(45) Veröffentlichungstag und Bekanntmachung des Hinweises auf die Patenterteilung: **13.01.1993**
(21) Anmeldenummer: 89120053.7
(22) Anmeldetag: 28.10.1989
(51) Int. Cl.: G01M 9/00, B64C 3/30, G02B 26/08

(54) **Verformbare Wand**
Deformable wall
Paroi déformable

(30) Priorität: 09.11.1988 DE 3837970
(43) Veröffentlichungstag der Anmeldung: 16.05.1990
(73) Patentinhaber: DEUTSCHE FORSCHUNGSANSTALT FÜR LUFT- UND RAUMFAHRT e.V., 53111 Bonn (DE)
(72) Erfinder: Wulf, Rudolf, D-3400 Göttingen (DE); Binder, Burkhard, D-3400 Göttingen-Hetjershausen (DE); Hieronimus, Beatrix, D-3405 Rosdorf-Mengershausen (DE)
(74) Vertreter: Rehberg, Elmar, Dipl.-Ing.

(56) Entgegenhaltungen:
- FR-A- 816 766
- US-A- 3 118 639
- US-A- 4 033 676
- US-A- 4 492 431
- NASA TECH BRIEFS. Juli 1988, WASHINGTON US Seite 569 Ames Research Center: "Adaptive Wall Wind Tunnel"

## Beschreibung

Die Erfindung geht aus von einer verformbaren Wand gemäß dem Oberbegriff des Patentanspruchs 1.

Verformbare Wände werden für verschiedenartige Einsatzbedingungen benötigt. So finden verformbare Wände beispielsweise Anwendung in der Windkanalversuchstechnik, bei der die Wand eines Windkanals derart verformt, d. h. angepaßt werden muß, daß sie dem Stromlinienverlauf, der durch das sich im Windkanal befindliche Modell hervorgerufen wird, folgt. Dies ist erwünscht, um die Interferenzen der Windkanalwand auf die Umströmung des Modells im Windkanal zu reduzieren bzw. zu eliminieren. Weiterhin besteht mit solch einer verformbaren Wand die Möglichkeit, ggf. auftretende Verdichtungsstöße an der Wand zu löschen, so daß sie nicht bedingt durch Reflektion wiederum auf das Modell auftreffen. Auch diese Maßnahme dient somit der Vermeidung von Wandinterferenzen.

Ein weiteres Einsatzgebiet verformbarer Wände liegt bei Flugzeugtragflügeln, deren Kontur bzw. bei denen Teile der Kontur von der verformbaren Wand gebildet werden. Es besteht somit die Möglichkeit, durch Verformen der Wand die Kontur des Flugzeugtragflügels jederzeit zu verändern, so daß die Kontur den jeweils vorliegenden Bedingungen entsprechend angepaßt werden kann. Dadurch wird eine erhebliche Einsparung von Treibstoff erzielt. Auch lassen sich durch Verformen der Wand Tragflügelnasen derart verändern, daß für die Start- und Landephase sogenannte Vorflügel erzeugt werden. Man spart dadurch komplizierte Verstellmechanismen ein und vermeidet Konturunterbrechungen, die ganz besonders bei der Entwicklung eines Laminartragflügels vermieden werden müssen.

Eine verformbare Wand der eingangs beschriebenen Art ist aus der Zeitschrift für Flugwissenschaften und Weltraumforschung 3 (1979), Heft 2, Seiten 129 bis 133, bekannt. In dem Artikel von U. Ganzer "Windkanäle mit adaptiven Wänden zur Beseitigung von Wandinterferenzen" wird eine verformbare Wand mit einer der Strömung zugekehrten, örtlich verformbaren Vorderseite beschrieben, die aus glasfaserverstärktem Kunststoff hergestellt ist. Es sind eine Vielzahl von Verstelleinrichtungen vorgesehen, die mit der Wand über Gelenke verbunden sind. Diese verformbare Wand wird als Windkanalwand benutzt, so daß die Strömung im Windkanal entsprechend dem durch das Windkanalmodell verursachten Stromlinienverlauf angepaßt werden kann. Wie oben bereits beschrieben, werden dadurch Windkanalinterferenzen reduziert bzw. eliminiert. Nachteilig ist, daß die Baugröße relativ groß ist. Dadurch bedingt ist ebenfalls der minimal mögliche Abstand zwischen den einzelnen Verstellvorrichtungen relativ groß, so daß eine Feineinstellung der Wand nicht möglich ist. Insbesondere beim Auftreten von Verdichtungsstößen kann diese Wand aufgrund des relativ großen Stützstellenabstands die Verdichtungsstöße nicht löschen. Weiterhin nachteilig ist, daß durch die Anordnung der Gelenke bei verstellter Wand aufgrund der Verstelleinrichtungen ein Moment ausgeübt wird, so daß letztendlich die verstellte Wand eine Welligkeit aufweist. Dies ist jedoch unerwünscht, da solch eine Welligkeit sich wiederum auf die Umströmung des zu vermessenden Windkanalmodells auswirkt.

Aus der DE-AS 29 41 404 ist eine Meßstrecke an Windkanälen bekannt, die ebenfalls eine verformbare Wand aufweist. Diese verformbare Wand ist im Querschnitt kreisförmig und aus vorzugsweise Gummi hergestellt. Auch hier greifen eine Vielzahl von Verstellvorrichtungen, die am Umfang und in Längsrichtung angeordnet sind, an der Wand an und bewirken somit die Möglichkeit der Verformbarkeit. Das Prinzip der Verformung der Wand ist also dasselbe wie bereits oben beschrieben, mit all seinen Nachteilen wie begrenzter Stützstellenabstand und damit letztendlich auch mit nur geringer Genauigkeit der Wandeinstellung.

Aus der US-A-31 18 639 ist eine Struktur mit zwei äußeren Oberflächen bekannt, deren Gestalt durch die Beaufschlagung von im Inneren der Struktur parallel zueinander angeordneten Hohlräumen mit Druck verstellbar ist. Eine lokale Verformung einer der Oberflächen ist hierbei nicht möglich. Vielmehr verändert die Beaufschlagung eines einzigen Hohlraums mit Druck bereits die Veränderung der gesamten Gestalt der Struktur. Mit der Struktur und ihrer Beweglichkeit sollen die Antriebstechniken von Fischen und Wassertieren nachgebildet werden.

Aus der FR-A-81 67 66 ist ein pneumatischer Tragflügel bekannt. Auf der Unterseite des weitgehend starren, in eine Art Landeklappe auslaufenden Tragflügels ist eine von einem Leintuch abgedeckte Luftkammer vorgesehen. Durch Beaufschlagung der Luftkammer mit Druck in einer gestreckten Stellung der Landeklappe wird eine ebene Oberfläche an der Tragflügelunterseite ausgebildet. Um den Auftrieb des Tragflügels insbesondere in Notfällen zu erhöhen, ist es möglich den Druck aus der Luftkammer abzulassen und die Landeklappe nach unten anzustellen. Hierdurch ergibt sich eine starke Einwölbung der Oberfläche auf der Unterseite des Tragflügels. Diese Gestaltung des Tragflügels führt zu dem gewünschten erhöhten Auftrieb. Eine Möglichkeit zur örtlichen Verformung der Oberflächen des Tragflügels ist nicht gegeben. Vielmehr sind ausschl. die Stellungen ebene und nach innen gewölbte Tragflügelunterseite möglich.

Aus der US-A-4 033 676 ist es bekannt, einen Brennspiegel mit einer ringförmig eingespannten elastischen Folie als Reflektor auszubilden. Durch Anlegen von Unterdruck an die Rückseite der elastischen Folie ergibt sich die gewünschte sphärische Krümmung der Reflektoroberfläche. Eine örtliche Verformung der Reflektoroberfläche ist auch hier nicht möglich.

Aus der US-A-44 92 431 ist ein verstellbarer Spiegel mit einer Spiegelfläche aus elastischem Material bekannt. Auf der Rückseite der Spiegelfläche sind druckbetriebene Aktuatoren zur Einstellung der Spiegelfläche angeordnet. Mit den Aktuatoren kann die Spiegeloberfläche auch lokal verformt werden. Der hierzu notwendige apparative Aufwand ist jedoch ausgesprochen groß. Er entspricht demjenigen beim Verstellen einer verformbaren Wand mit den bekannten Verstellvorrichtungen. Weiterhin sind größere lokale Verformungen der Spiegeloberfläche durch die auf der Rückseite angreifenden Aktuatoren nicht möglich. Dies ist bei dem bekannten Spiegel, bei dem durch die Aktuatoren im wesentlichen Fertigungstoleranzen ausgeglichen werden, auch nicht erforderlich.

Der Erfindung liegt die Aufgabe zugrunde, eine verformbare Wand der eingangs beschriebenen Art derart weiterzubilden, daß eine vorgegebene Auslenkung mit hoher Genauigkeit, aber dennoch geringem apparativem Aufwand einstellbar ist.

Erfindungsgemäß wird dies durch die kennzeichnenden Merkmale des Patentanspruchs 1 gelöst. Die vorliegende Erfindung schlägt somit einen neuen Weg zur Lösung des Problems ein. Im Innern der Wand sind mehrere geschlossene Hohlräume vorgesehen, mit denen eine Vorrichtung zum Einstellen des Hohlraumdrucks in Verbindung steht. Durch die Variierung des Hohlraumdrucks läßt sich die gewünschte örtliche Verformung der Vorderseite der Wand erreichen. So beugt sich z. Bsp. die Vorderseite der Wand über einen Hohlraum, dessen Hohlraumdruck erhöht wird, aus. Die Größe der Auslenkung, also der Verformung der Wand, ist abhängig von dem Druck, der im Hohlraum durch die Vorrichtung erzeugt wird. Der Zusammenhang zwischen dem Hohlraumdruck und der Auslenkung der Wand ist ggf. über eine entsprechende Eichung leicht zu ermitteln. Wird der Hohlraumdruck wieder erniedrigt, so bildet sich die Verformung zurück, d. h. die Wand nimmt wieder ihre ursprüngliche Gestalt an. Der Hohlraumdruck läßt sich durch einfache Maßnahmen sehr leicht und genau bestimmen, so daß letztendlich die Wandauslenkung sehr genau durchgeführt werden kann. Die Vielzahl der Hohlräume stellt sicher, daß dies für alle wesentlichen Bereiche der Wand möglich ist. Weiterhin vorteilhaft ist, daß der Druck auch relativ schnell entsprechend verändert werden kann, so daß eine langwierige Verstellung, wie sie im Stand der Technik erfolgt, hier entfällt. Auch ist die erfindungsgemäße Wand einfach und ohne mechanische Teile aufgebaut, so daß eine hohe Betriebssicherheit gegeben ist. Aufgrund des einfachen Aufbaus läßt sich die verformbare Wand auch relativ preiswert herstellen, was ihren Einsatzbereich erheblich erhöht. Ein weiterer wichtiger Vorteil ist darin zu sehen, daß die verformbare Wand auch bei kryogenen Temperaturen einsetzbar ist, so, wie sie bei heutigen, modernen Windkanälen auftreten können. Selbst bei diesen extremen Bedingungen sind keinerlei Betriebsstörungen zu erwarten.

Zwischen den einzelnen Hohlräumen können Quer- und Längsstege vorgesehen sein, wobei die in Querrichtung benachbarten Hohlräume versetzt zueinander angeordnet sind. Die Hohlräume in der Wand können ganz verschiedenartig ausgebildet sein, so daß sie an die jeweiligen Einsatzbedingungen der Wand anpaßbar sind. Es besteht auch die Möglichkeit, daß in Querrichtung der Wand eine Vielzahl von Hohlräumen über bzw. untereinander und in Längsrichtung nebeneinander vorgesehen sind. Zwischen den einzelnen Hohlräumen sind dann die Quer- bzw. Längsstege gebildet. Die einzelnen Hohlräume beeinflussen sich nun über die Quer- und Längsstege gegenseitig, so daß letztendlich durch unterschiedliche Hohlraumdrücke in den einzelnen Hohlräumen eine gewünschte Kontur der verformbaren Wand mit hoher Genauigkeit eingestellt werden kann. Die Querschnittsform der einzelnen Hohlräume als auch ihre Größe wird in erster Linie nach dem erforderlichen Verstellweg und der erforderlichen Genauigkeit ausgelegt. Das gleiche gilt für die vorzusehene Anzahl der einzelnen Hohlräume. Soll beispielsweise ein relativ großer Verstellweg realisiert werden, so ist eine Vielzahl von Hohlräumen insbesondere in Querrichtung erforderlich. Um eine hohe Genauigkeit zu erreichen, müssen möglichst viele Hohlräume in Längsrichtung vorgesehen sein. Da diese Hohlräume auch fast beliebig klein gestaltet werden können, kann die Anzahl der Hohlräume entsprechend gesteigert werden.

Die Hohlräume können in Tiefenrichtung unterteilt ausgebildet sein, wobei zu der Rückseite der Wand geführte Kanäle vorgesehen sind. Bei einer zwei-dimensionalen Wand werden die Hohlräume meist durchgehend ausgebildet sein. Die Vorrichtung zur Änderung der Hohlraumdrücke wird dann an einem Ende der jeweiligen Hohlräume angeschlossen, während das andere Ende des jeweiligen Hohlraums verschlossen wird. Sind die Hohlräume zweiteilig ausgebildet, so kann beidseitig der Wand eine Anschlußmöglichkeit für die Vorrichtung zur Änderung des Hohlraumdrucks angebracht werden. Bei mehr als zweiteilig unterteilt ausgebildeten Hohlräumen sind die Kanäle zu der Rückseite der Wand als Anschluß vorgesehen.

Ausgewählte Quer- und/oder Längsstege oder Teile davon können aus hochelastischem Material vorgesehen sein. Dies hat den Vorteil, daß bei einer Verformung der Wand, die mit einer Längenänderung einhergeht, aufgrund des hochelastischen Materials ein Längenausgleich erzielt wird. Spannungen in der Wand oder gar Welligkeiten aufgrund der Längenänderung durch die Verformung werden somit wirksam verhindert.

Für jeden Hohlraum kann eine separate Vorrichtung zur Änderung des Hohlraumdrucks vorgesehen sein. Ebenso ist es aber auch möglich, daß die Hohlräume zu Hohlraumgruppen zusammengefaßt sind, und daß für jede Hohlraumgruppe eine Vorrichtung zur Änderung des Hohlraumdrucks vorgesehen ist, und daß zwischen den einzelnen Vorrichtungen zur Änderung des Hohlraumdrucks und den zugeordneten Hohlraumgruppen eine Scannvorrichtung angeordnet ist. Es besteht somit einerseits die Möglichkeit, jeden Hohlraum separat mit der eigenen Vorrichtung zur Veränderung des Hohlraumdrucks zu versorgen und somit die Einstellung der Wand in sehr kurzer Zeit durchzuführen. Ist eine sehr schnelle Verstellung bzw. Verformung der Wand nicht erforderlich, so können die Vorrichtungen zur Änderung des Hohlraumdrucks bzw. der Hohlraumdrücke bis auf eine einzelne Vorrichtung reduziert werden. Zwischen der Vorrichtung und den Hohlraumgruppen ist dann die Scannvorrichtung vorgesehen, die die Vorrichtung zur Änderung des Hohlraumdrucks mit den einzelnen Hohlräumen verbindet, so daß speziell jeder einzelne Hohlraum angesteuert werden kann.

Die Vorrichtung zur Änderung des Hohlraumdrucks kann derart ausgebildet sein, daß sie Gas oder Flüssigkeit in die Hohlräume einleitet. Wichtig ist dabei nur, daß der jeweilige Stoff eine Volumenänderung der Hohlräume bewirkt. Die Verwendung von Gas ist vorteilhaft, da damit leicht auch ein Unterdruck in den Hohlräumen erzeugt werden kann und somit eine negative Auslenkung der verformbaren Wand möglich ist.

An der steif ausgebildeten Rückseite der Wand können Verstellvorrichtungen, vorzugsweise Stellmotore, vorgesehen sein. Die Stellmotore dienen dann der Grobeinstellung der Wand, während die Veränderung der Hohlraumdrücke bzw. die Vergrößerung oder Verkleinerung der Hohlräume eine Feineinstellung der Wand bewirken. Dabei kann der Abstand der Hohlräume in der Längserstreckung der Wand kleiner sein als derjenige der Verstellvorrichtungen.

Die Erfindung wird anhand von bevorzugten Ausführungsbeispielen weiter beschrieben. Es zeigen:
Figur 1 eine schematisierte drei-dimensionale Darstellung einer verformbaren Wand,
Figur 2 einen Schnitt gemäß II-II in Figur 1,
Figur 3 eine schematische Darstellung einer Regeleinheit für die verformbare Wand,
Figur 4 eine Anschlußmöglichkeit einer Vorrichtung zur Änderung der Hohlraumdrücke und
Figur 5 eine weitere Möglichkeit zur Anordnung der Vorrichtung zur Änderung der Hohlraumdrücke.

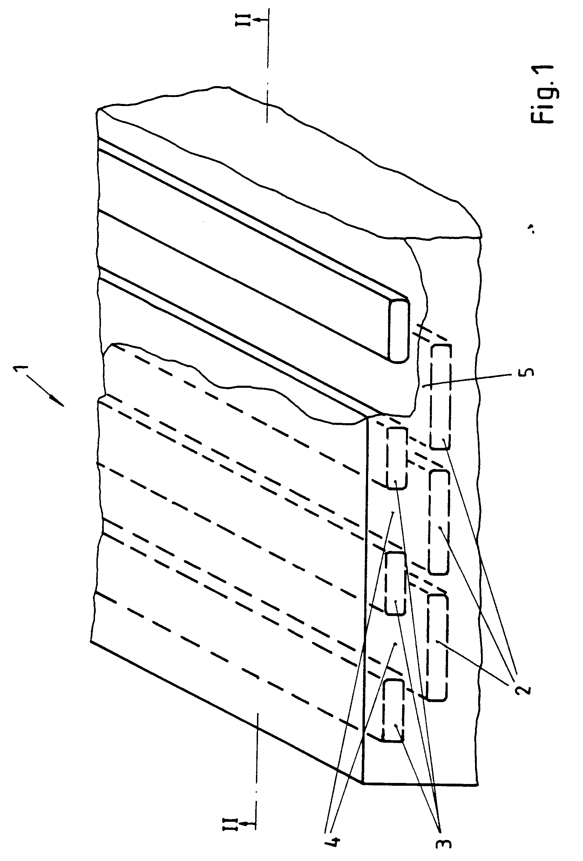

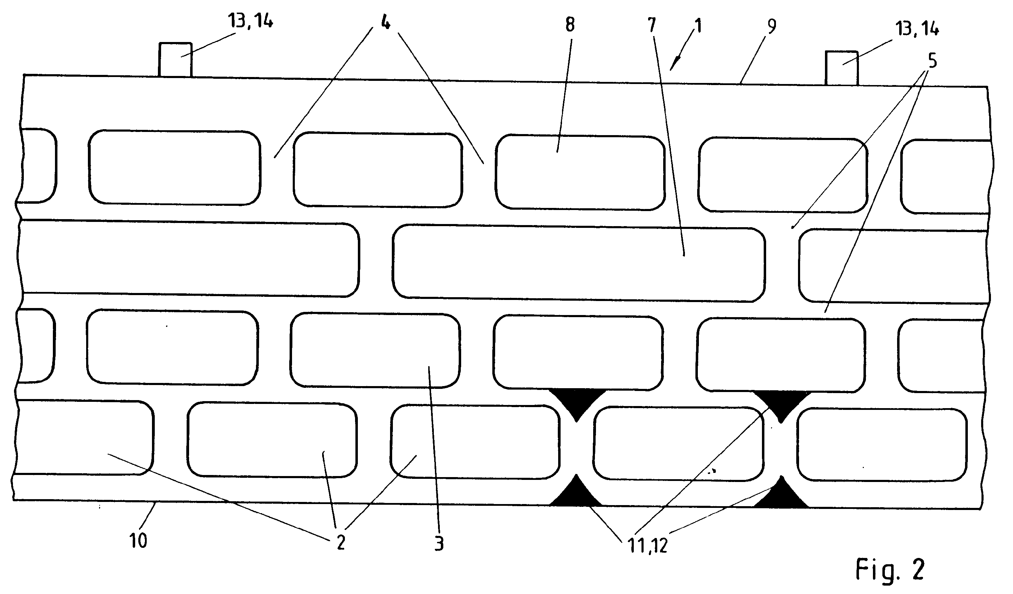

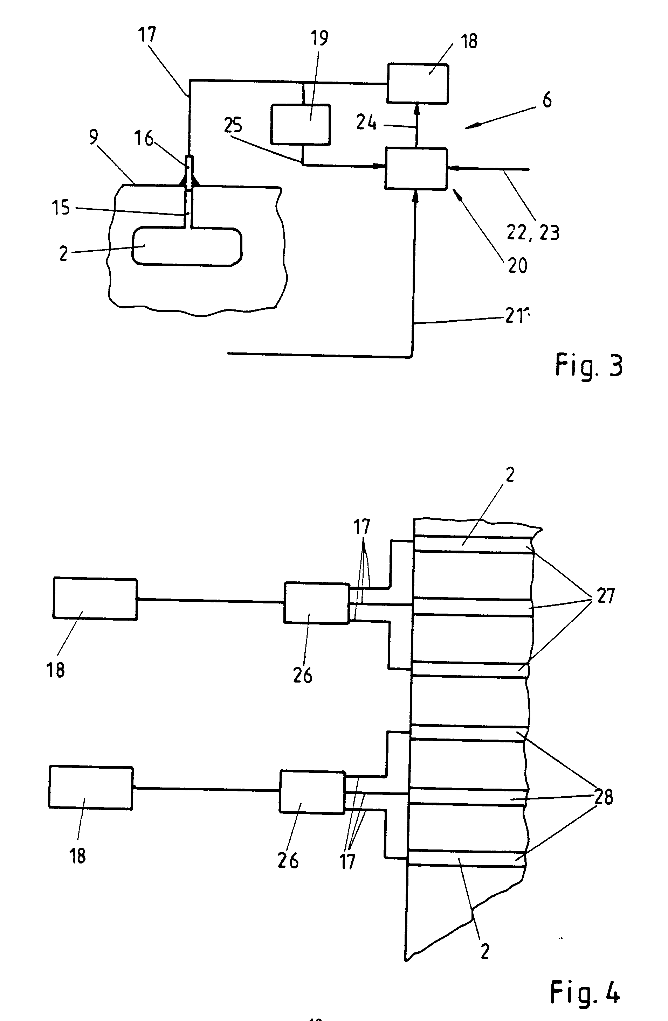

Figur 1 zeigt, stark schematisiert, eine verformbare Wand 1 mit einer einer Strömung beispielsweise eines Windkanals zugekehrten Vorderseite 10 und einer der Strömung abgekehrten Rückseite 9. Die Wand 1 weist eine Vielzahl von Hohlräumen 2 und 3 auf. Zwischen den Hohlräumen 2 und 3 sind Querstege 4 und Längsstege 5 gebildet. Die Hohlräume 2 und 3 haben einen in etwa rechteckigen querschnitt, können aber auch jeden anderen beliebigen querschnitt aufweisen. Die Tiefenerstreckung der Hohlräume 2 und 3 ist durchgehend, d. h. in Tiefenrichtung sind die Hohlräume 2, 3 durchgehend vorgesehen. An den Hohlräumen 2, 3 sind, siehe Figuren 3, 4 und 5, Vorrichtungen zur Änderung des Hohlraumdrucks 6 angeschlossen. Eine mögliche Anordnungsvariante der Hohlräume 2, 3 ist besonders gut aus Figur 2 ersichtlich. Dort sind neben den Hohlräumen 2 und 3 noch weitere Hohlräume 7 und 8 vorgesehen. Die Rückseite 9 der Wand 1 ist relativ steif ausgebildet, d. h. die Faserrichtung des verstärkten Kunststoffs ist derart gewählt, daß sich eine relativ hohe Festigkeit ergibt, während an der Vorderseite 10 Zonen 11 vorgesehen sind, die aus hochelastischem Material 12 bestehen. Zur Realisierung großer Verstellwege bzw. großer Auslenkungen der Wand 1 sind an der steif ausgebildeten Rückseite 9 Verstellvorrichtungen 13 angeordnet, die vorzugsweise Schrittmotoren 14 aufweisen.

Im Folgenden soll nun die Funktionsweise näher erläutert werden. Ausgegangen werden kann von einer glatten Wand 1 oder aber auch von einer bereits verformten Wand 1. Ausgehend von der vorhandenen Kontur der Wand 1 soll eine neue Kontur eingestellt werden, d. h. die Vorderseite 10 der Wand 1 soll eine bestimmte, vorgegebene Kontur nach der Einstellung aufweisen. Für die Grobeinstellung werden dazu erst einmal die Verstellvorrichtungen 13, wie es auch bereits im Stand der Technik bekannt ist, entsprechend verstellt. Die nun eingestellte Wand 1 weist jedoch noch eine gewisse Welligkeit auf, die vorgegebene Kontur ist also nur sehr ungenau wiedergegeben. Um diese Ungenauigkeiten zu vermeiden bzw. auszugleichen, werden nun mit Hilfe der Vorrichtung zur Änderung des Hohlraumdrucks in den Hohlräumen 2, 3, 7, 8 entsprechende Hohlraumdrücke erzeugt. Dazu wird vorzugsweise Gas oder Flüssigkeit in die Hohlräume 2, 3, 7, 8 eingebracht bzw. abgeleitet. Wird beispielsweise Gas in einem oder mehreren der Hohlräume 8 eingeleitet, der Hohlraumdruck also erhöht, so dehnen sich diese Hohlräume 8 aus, d. h. sie verformen sich also aufgrund des größeren Hohlraumdrucks. Diese Verformung wird über die Querstege 4 und Längsstege 5 auf die sich unterhalb der Vorderseite 10 befindlichen Hohlräume 2, 3, 7 übertragen. Schon durch diese erste Verformung ist mit einer hohen Genauigkeit die gewünschte Wandkontur erreicht.

Eine weitere Steigerung der Genauigkeit wird durch Änderung des Hohlraumdrucks der Hohlräume 2, 3, 7 erreicht. Der Hohlraum 2 soll überweigend den gleichen Druck erhalten, wie der Außendruck längs der Seite 10. Lediglich zur Erreichung von Maxima oder Minima im Konturverlauf der Vorderseite 10 ist über- oder Unterdruck im Hohlraum 2 gegenüber dem Außendruck an der Vorderseite 10 der Wand 1 erforderlich. Durch die in großem Bereich frei wählbare Anzahl der Hohlräume ist es möglich, die Genauigkeit der Kontur der Wand 1 fast beliebig zu steigern. Die bei der Verformung der Wand 1 auftretenden Spannungen insbesondere im Bereich der Vorderseite 10 werden durch die Zonen 11 mit dem hochelastischen Material 12 ausgeglichen. Damit wird eine sonst auftretende Welligkeit zuverlässig vermieden.

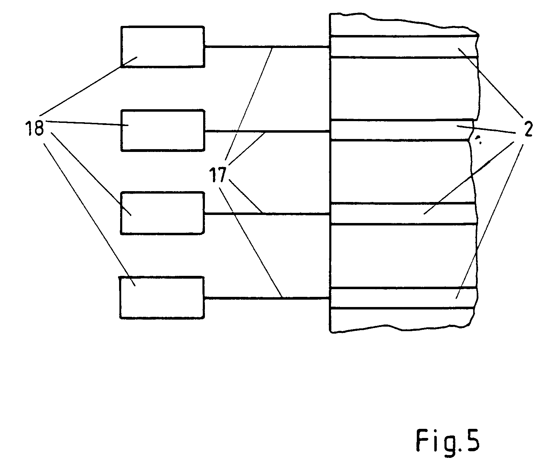

In Figur 3 ist eine Möglichkeit zur Änderung des Hohlraumdrucks aufgezeigt. Der Hohlraum 23 steht über einen Kanal 15 mit der Seite 9 der Wand 1 in Verbindung. In dem Kanal 15 ist ein Röhrchen 16 eingeklebt, welches über einen Schlauch 17 mit der Vorrichtung zur Änderung des Hohlraumdrucks 6 in Verbindung steht. Die Vorrichtung zur Änderung des Hohlraumdrucks weist eine Druckquelle 18, ein Druckmeßgerät 19 und eine Regeleinheit 20 auf. Von hier nicht weiter dargestellten Aufnehmern zur Bestimmung der Ist-Kontur der Wand 1 wird ein entsprechendes Signal über eine Leitung 21 der Regeleinheit 20 zugeführt. Dieses Ist-Signal wird mit einem Soll-Signal 22, welches über die Leitung 23 an der Regeleinheit 20 anliegt, verglichen. Stimmen die Signale nicht überein, so wird über eine Leitung 24 ein entsprechendes Signal an die Druckquelle 18 angelegt, welche dann über den Schlauch 17 eine Änderung des Hohlraumdrucks des Hohlraums 2 bewirkt. Es ist auch möglich, anstelle der Ist-Kontur der Wand 1 den Ist-Druck längs der Vorderseite 10 der Wand 1 zu ermitteln. Mit Hilfe von bekannten Rechenverfahren lassen sich für den Windkanal aus den Drücken längs der Vorderseite 10 der Wand 1 die erforderlichen Wandverformungen und damit auch die erforderlichen Hohlraumdrücke errechnen. Diese Änderung des Hohlraumdrucks kann sowohl in einer Druckerhöhung als auch in einer Reduzierung des Drucks liegen. Der Hohlraumdruck wird von dem Druckmeßgerät 19 gemessen und ebenfalls der Regeleinheit 20 über die Verbindung 25 zugeführt. Es versteht sich, daß in der oben beschriebenen Art und Weise nicht nur der Hohlraumdruck des Hohlraums 2 verändert wird, sondern daß alle Hohlräume 2, 3, 7, 8 einen entsprechenden Anschluß aufweisen. Dabei muß nicht notwendigerweise jeder der Hohlräume 2, 3, 7, 8 eine separate Vorrichtung zur Änderung des Hohlraumdrucks 6 aufweisen, sondern es ist auch möglich, daß zwischen den einzelnen Hohlräumen 2, 3, 7, 8 und einer oder mehrerer Vorrichtungen zur Änderung des Hohlraumdrucks 6 eine Scannvorrichtung 26, siehe Figur 4, angeordnet ist. Weiterhin muß nicht notwendigerweise immer eine Regeleinheit 20 vorgesehen sein. Es ist durchaus denkbar, daß lediglich eine Steuervorrichtung vorgesehen ist.

In Figur 4 sind die Hohlräume 2 zu Hohlraumgruppen 27 und 28 zusammengefaßt. In dem hier gezeigten Fall besteht jede Hohlraumgruppe 27, 28 aus drei Hohlräumen 2. Es ist natürlich auch möglich, mehr oder weniger Hohlräume 2 der Hohlraumgruppe 27 bzw. 28 zuzuordnen. Jeder der Hohlräume 2 der Hohlraumgruppe 27 steht über dem Schlauch 17 mit der Scannvorrichtung 26 in Verbindung. Die Scannvorrichtung ist mit der Druckquelle 18 verbunden. Die Scannvorrichtung 26 verbindet nun nacheinander die einzelnen Hohlräume 2 der Hohlraumgruppe 27 mit der Druckquelle 18. Der Hohlraumdruck der Hohlräume 2 der Hohlraumgruppe 27 wird also nacheinander verändert. Dies hat den Vorteil, daß nur eine geringe Anzahl von Druckquellen 18 erforderlich ist. Nachteilig ist hier jedoch, daß die Änderung des Hohlraumdrucks sequentiell erfolgt und somit die Einstellung der Wand 1 mehr Zeit erfordert. Die Änderung des Hohlraumdrucks der Hohlräume 2 der Hohlraumgruppe 28 erfolgt entsprechend. Es ist natürlich aber auch möglich, wie in Figur 5 dargestellt, jedem Hohlraum 2 eine eigene Druckquelle 18 zuzuordnen. Die Verstellung der Wand 1 kann dann in sehr kurzer Zeit erfolgen.

### Bezugszeichenliste :

- 1: = Wand
- 2: = Hohlraum
- 3: = Hohlraum
- 4: = Querstege
- 5: = Längsstege
- 6: = Vorrichtung zur Änderung des Hohlraumdrucks
- 7: = Hohlraum
- 8: = Hohlraum
- 9: = Rückseite
- 10: = Vorderseite
- 11: = Zone
- 12: = hochelastisches Material
- 11: = Verstellvorrichtung
- 14: = Schrittmotore
- 15: = Kanal
- 16: = Röhrchen
- 17: = Schlauch
- 18: = Druckquelle
- 19: = Druckmeßgerät
- 20: = Regeleinheit
- 21: = Leitung
- 22: = Soll-Signal
- 23: = Leitung
- 24: = Leitung
- 25: = Verbindung
- 26: = Scannvorrichtung
- 27: = Hohlraumgruppe
- 28: = Hohlraumgruppe

## Patentansprüche

1. Verformbare Wand aus vorzugsweise verstärktem Kunststoff zur Begrenzung einer Strömung, insbesondere in der Windkanalversuchstechnik, mit einer der Strömung zugekehrten, örtlich verformbaren Vorderseite (10) und einer der Strömung abgekehrten Rückseite (9), dadurch gekennzeichnet, daß die Rückseite (9) steif ausgebildet ist, daß im Innern der Wand (1) eine Vielzahl von Hohlräumen (2, 3, 7, 8) mit unterschiedlicher Längs- und Quererstreckung vorgesehen sind, und daß eine an die Hohlräume angeschlossene Vorrichtung (6) zur Erhöhung oder Erniedrigung der Drücke in den Hohlräumen (2, 3, 7, 8) zwecks örtlicher Verformung der Vorderseite (10) relativ zu der steifen Rückseite (9) vorgesehen ist.

2. Verformbare Wand nach Anspruch 1, dadurch gekennzeichnet, daß zwischen den einzelnen Hohlräumen (2, 3, 7, 8) Quer- und Längsstege (4, 5) vorgesehen ist, und daß die in Querrichtung benachbarten Hohlräume versetzt zueinander angeordnet sind.

3. Verformbare Wand nach Anspruch 2, dadurch gekennzeichnet, daß die Hohlräume (2, 3, 7, 8) in Tiefenrichtung unterteilt ausgebildet sind und daß zu der Rückseite (9) geführte Kanäle (15) vorgesehen sind.

4. Verformbare Wand nach Anspruch 2, dadurch gekennzeichnet, daß ausgewählte Quer- und/oder Längsstege (4, 5) oder Teile davon aus hochelastischem Material vorgesehen sind.

5. Verformbare Wand nach einem oder mehreren der Ansprüche 1 bis 4, dadurch gekennzeichnet, daß für jeden Hohlraum (2, 3, 7, 8) eine separate Vorrichtung (6) zur Änderung des Hohlraumdrucks vorgesehen ist.

6. Verformbare Wand nach einem oder mehreren der Ansprüche 1 bis 4, dadurch gekennzeichnet, daß die Hohlräume (2, 3, 7, 8) zu Hohlraumgruppen (27, 28) zusammengefaßt sind, daß für jede Hohlraumgruppe (27, 28) eine Vorrichtung (6) zur Änderung des Hohlraumdrucks vorgesehen ist, und daß zwischen den einzelnen Vorrichtungen zur Änderung des Hohlraumdrucks und den zugeordneten Hohlraumgruppen (27, 28) eine Scannvorrichtung (26) angeordnet ist.

7. Verformbare Wand nach einem oder mehreren der Ansprüche 1 bis 6, dadurch gekennzeichnet, daß die Vorrichtung (6) zur Änderung des Hohlraumdrucks derart ausgebildet ist, daß sie Gas oder Flüssigkeit in die Hohlräume (2, 3, 7, 8) einleitet bzw. ableitet, und daß eine Steuer- oder Regeleinheit (20) für den Hohlraumdruck vorgesehen ist.

8. Verformbare Wand nach einem oder mehreren der Ansprüche 1 bis 7, dadurch gekennzeichnet, daß an der steif ausgebildeten Rückseite (9) der Wand (1) Verstellvorrichtungen (1, 13), vorzugsweise Stellmotore (14), vorgesehen sind.

9. Verformbare Wand nach Anspruch 8, dadurch gekennzeichnet, daß der bestand der Hohlräume (2, 3, 7, 8) in der Längserstreckung der Wand (1) kleiner ist als derjenige der Verstellvorrichtungen (13).

## Claims

1. Deformable wall made of preferably reinforced plastic for the limitation of an airstream, in particular in wind tunnel testing techniques, having a locally deformable front face (10) which faces the airstream and a rear side (9) facing away from the airstream, characterised in that the rear side (9) is of rigid construction, in that a multiplicity of cavities (2, 3, 7, 8) of differing longitudinal and transverse extent is provided in the interior of the wall (1), and in that a device (6) connected to the cavities is provided to increase or decrease the pressures in the cavities (2, 3, 7, 8) for the purpose of local deformation of the front face (10) relative to the rigid rear side (9).

2. Deformable wall according to Claim 1, characterised in that transverse and longitudinal webs (4, 5) are provided between the individual cavities (2, 3, 7, 8), and in that the cavities, which are adjacent in the transverse direction, are arranged to be mutually offset,

3. Deformable wall according to Claim 2, characterised in that the cavities (2, 3, 7, 8) in the direction of the depth are constructed to be divided, and in that ducts (15) leading to the rear side (9) are provided.

4. Deformable wall according to Claim 2, characterised in that selected transverse and/or longitudinal webs (4, 5) or parts thereof made of highly flexible material (12) are provided.

5. Deformable wall according to one or more of Claims 1 to 4, characterised in that a separate device (6) is provided for each cavity (2, 3, 7, 8) to change the cavity pressure.

6. Deformable wall according to one or more of Claims 1 to 4, characterised in that the cavities (2, 3, 7, 8) are combined to form cavity groups (27, 28), in that a device (6) to change the cavity pressure is provided for each cavity group (27, 28), and in that a scanning device (26) is arranged between the individual devices (6) to change the cavity pressure and the associated cavity groups (27, 28).

7. Deformable wall according to one or more of Claims 1 to 6, characterised in that the device (6) to change the cavity pressure is constructed in such a way that it introduces gas or liquid into the cavities (2, 3, 7, 8) or withdraws gas or liquid, and in that a control or regulating unit (20) is provided for the cavity pressure.

8. Deformable wall according to one or more of Claims 1 to 7, characterised in that adjustment devices (1, 13), preferably servomotors (14), are provided on the rigidly constructed rear side (9) of the wall (1).

9. Deformable wall according to Claim 8, characterised in that the spacing of the cavities (2, 3, 7, 8) in the longitudinal extent of the wall (1) is smaller than that of the adjustment devices (13).

## Revendications

1. Paroi déformable, de préférence en matière plastique renforcée, pour délimiter un écoulement, en particulier dans la technique d'essais en tunnel aérodynamique, avec un côté antérieur (10) localement déformable, faisant face au courant, et un côté postérieur (9) à l'opposé du courant,
**caractérisée** en ce que le côté postérieur est rigide, en ce que, à l'intérieur de la paroi, est prévue une multiplicité de cavités (2, 3, 7, 8) de longueurs et d'étendues transversales différentes, et en ce qu'un dispositif (6) raccordé aux cavités est prévu pour augmenter ou diminuer la pression dans les cavités (2, 3, 7, 8) dans le but de déformer localement le côté antérieur (10) par rapport au côté postérieur rigide (9).

2. Paroi déformable selon la revendication 1, caractérisée en ce que sont prévues,entre les cavités individuelles (2, 3, 7, 8), des âmes transversales et longitudinales (4,5), et en ce que des cavités voisines dans le sens transversal sont décalées entre elles.

3. Paroi déformable selon la revendication 2, caractérisée en ce que les cavités (2, 3, 7, 8) sont subdivisées dans le sens de la profondeur et en ce que sont prévus des canaux (15) aboutissant au côté postérieur (9).

4. Paroi déformable selon la revendication 2, caractérisée en ce que des âmes transversales et/ou longitudinales (4, 5) choisies, ou des parties de celles-ci, sont prévues en matériau très élastique.

5. Paroi déformable selon une ou plusieurs des revendications 1 à 4, caractérisée en ce que, pour chaque cavité (2, 3, 7, 8), est prévu un dispositif (6) séparé pour faire varier la pression de la cavité.

6. Paroi déformable selon une ou plusieurs des revendications 1 à 4, caractérisée en ce que les cavités (2, 3, 7, 8) sont réunies en groupes de cavités (27, 28), en ce que, pour chaque groupe (27, 28) de cavités il est prévu un dispositif (6) pour faire varier la pression des cavités, et en ce qu'un dispositif de balayage (26) est disposé entre les dispositifs individuels pour faire varier la pression des cavités et les groupes (27, 28) de cavités associés à ces dispositifs.

7. Paroi déformable selon une ou plusieurs des revendications 1 à 6, caractérisée en ce que le dispositif (6) pour faire varier la pression des cavités est constitué de telle sorte qu'il introduit dans les cavités (2, 3, 7, 8) un gaz ou un liquide et en soutire celui-ci, et en ce qu'il est prévu une unité (20) de commande ou de régulation pour la pression des cavités.

8. Paroi déformable selon une ou plusieurs des revendications 1 à 7, caractérisée en ce que, sur le côté postérieur rigide (9) de la paroi (1), sont prévus des dispositifs de réglage (13, 14), de préférence des moteurs de réglage (14).

9. Paroi déformable selon la revendication 8, caractérisée en ce que l'espacement des cavités (2, 3, 7, 8) dans le sens de l'étendue longitudinale de la paroi (1) est plus petit que celui des dispositifs de réglage (13).
